# EUROPEAN PATENT SPECIFICATION

(11) **EP 3 192 967 B1**
(45) Date of publication and mention of the grant of the patent: **27.02.2019**
(21) Application number: 16182665.6
(22) Date of filing: 03.08.2016
(51) Int. Cl.: F01D 5/06

(54) **GAS TURBINE ROTOR ASSEMBLY WITH IMPROVED SHAPED TORQUE PIN**
GASTURBINENROTORANORDNUNG MIT VERBESSERTEM GEFORMTEM DREHMOMENTSTIFT
ENSEMBLE DE ROTOR DE TURBINE À GAZ AVEC AMÉLIORATION DE COUPLE EN FORME DE TIGE

(30) Priority: 18.01.2016 KR 20160005766
(43) Date of publication of application: 19.07.2017
(73) Proprietor: Doosan Heavy Industries & Construction Co., Ltd., Seongsan-gu Changwon, Gyeongnam 642-792 (KR)
(72) Inventor: PARK, Jong Seung, 51579 Gyeongsangnam-do (KR)
(74) Representative: Ter Meer Steinmeister & Partner

(56) References cited:
- EP-A1- 2 546 461
- WO-A1-2012/037347
- CH-A- 363 661

## Description

### BACKGROUND OF THE INVENTION

### Field of the Invention

Exemplary embodiments of the present invention relate to a gas turbine rotor assembly with a torque pin, and more particularly, to a gas turbine rotor assembly with a torque pin, in which a torque pin is easily assembled while a low load is applied to a pin head.

### Description of the Related Art

In general, turbines are power generation apparatuses which convert heat energy of fluid such as gas or steam into rotational force as mechanical energy, and each includes a rotor having a plurality of buckets to axially rotate by fluid and a casing which is installed to surround the rotor and has a plurality of diaphragms.

Here, a gas turbine from among these turbines includes a compressor, a combustor, and a turbine. In the gas turbine, outside air is introduced and compressed by rotation of the compressor and is then transferred to the combustor, and combustion is performed by mixture of compressed air and fuel in the combustor.

The turbine includes a plurality of rotor disks, and a plurality of rotor blades is radially installed around each rotor disk. High-temperature and high-pressure gas generated by the combustor rotates the rotor by rotating the rotor blades while passing through the turbine, thereby driving a generator.

When torque is transferred between the adjacent disks of the rotor, a radial load may occur in each disk due to a difference in thermal expansion between the adjacent disks or a different in bending according to mechanical installation positions thereof. The occurrence of the radial load may cause problems relating to joint fixation or surface abrasion. In this case, the disks are not merely replaced, but the entirety of the rotor may be sometimes replaced. Thus, in order to resolve these problems, there is used a torque pin for rotor torque transfer as disclosed in Japanese Patent Laid-open Publication No. 2012-002357.

However, since the cylindrical torque pin disclosed in the above patent document does not has an area enough to receive a shear force, there are problems in that it is necessary to increase the number of torque pins and the torque pin must be accurately aligned when disks are fastened to each other.

EP 2 546 461 A1 describes a rotor assembly which includes a first rotor disk defining a first axially extending slot and a second rotor disk defining a second axially extending slot. Additionally, the rotor assembly may include a pin extending lengthwise between the first and second rotor disks. The pin may include a first end terminating within the first axially extending slot and a second end terminating within the second axially extending slot.

CH 363 661 A describes a connection between two ring-shaped coaxially arranged machine elements. The connection comprises a series of radially extending pins held by one element and extending into radially extending openings of the other element. The pin has a spherical shaped part.

### SUMMARY OF THE INVENTION

An object of the present invention is to provide a gas turbine rotor assembly with a torque pin, in which a torque pin is easily assembled while a low load is applied to the torque pin.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

The object is solved by the features of the independent claims.

In accordance with one aspect of the present invention, a gas turbine rotor assembly with a torque pin includes a plurality of rotor disks, each having protruding plate portions circumferentially protruding from both disk-shaped plate surfaces, and a plurality of slots recessed in each of the protruding plate portions, and a spherical torque pin inserted into one of the slots.

Here, a single or plurality of torque pins may be inserted into each slot.

Further, the number of the inserted torque pin may vary for each slot. For example, two torque pins may be inserted into a certain slot, and a single torque pin may be inserted into all or part of the rest slot.

The rotor disks may be disposed such that the protruding plate portion formed on one plate surface of one rotor disk comes into contact with the facing protruding plate portion of the adjacent rotor disk.

The rotor disks may be configured such that each slot in one protruding plate portion communicates with the slot facing with each slot while being formed in the protruding plate portion coming into contact with the one protruding plate portion.

The torque pin may be inserted into the communicating slots.

The rotor disks may include a first rotor disk and a second rotor disk, and slots formed in contact protruding plate portions of the first and second rotor disks may communicate with each other.

The torque pin may be inserted into the communicating slots, and may uniformly occupy an area of the slot of the first rotor disk and an area of the slot of the second rotor disk.

The communicating slots may have a size such that the torque pin is not moved in the state of being inserted into the slots.

It is to be understood that both the foregoing general description and the following detailed description of the present invention are exemplary and explanatory and are intended to provide further explanation of the invention as claimed.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a perspective view illustrating a portion of a rotor disk according to an embodiment of the present invention;
Fig. 2 is a cross-sectional view partially illustrating the rotor disk of Fig. 1; and
Fig. 3 is a perspective view illustrating a portion of a rotor disk according to another embodiment of the present invention.

### DESCRIPTION OF SPECIFIC EMBODIMENTS

A gas turbine rotor assembly with a torque pin according to exemplary embodiments of the present invention will be described below in more detail with reference to the accompanying drawings.

First, the structure of a typical gas turbine will be described in brief (however, the gas turbine will not be described with reference to the drawings since having a typical structure).

The gas turbine includes a substantially cylindrical casing, and the casing is partitioned therein into a compressor section and a turbine section. The compressor section into which air is introduced is disposed at an upstream side, and the turbine section from which combustion gas is discharged is disposed at a downstream side. A combustor is disposed between the compressor section and the turbine section.

Air introduced into the compressor section is compressed therein, the compressed air is supplied to and combusted in the combustor, and the combustion gas is supplied from the combustor to the turbine section.

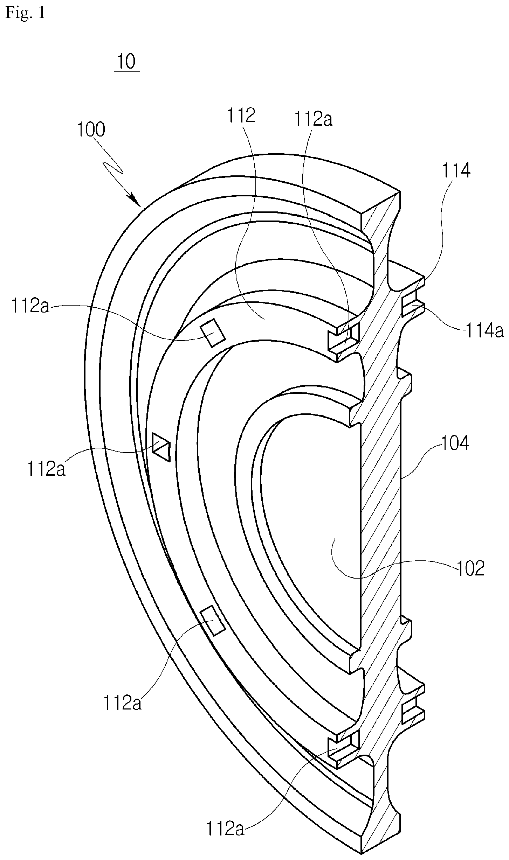

The compressor section is provided with a plurality of rotor disks (100 and 100' in Fig. 1), and each rotor disk is fastened by a tie rod so as not to be axially separated. That is, the rotor disks are axially aligned in the state in which the tie rod penetrates the substantially central portions thereof.

In addition, a plurality of blades is radially coupled to the outer peripheral surface of each rotor disk. Each blade is fastened to the rotor disk in various manners, such as using a dovetail.

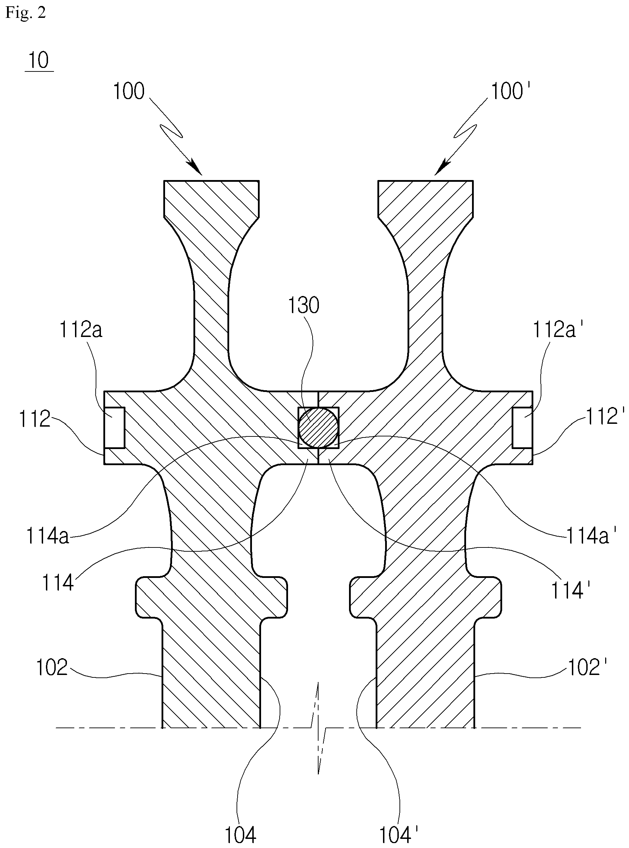

Fig. 1 is a perspective view illustrating a portion of a rotor disk according to an embodiment of the present invention. Fig. 2 is a cross-sectional view partially illustrating the rotor disk of Fig. 1 (the rotor disk described and illustrated in the embodiment is an example of various rotor disks, and it is not limited to that disclosed in the specification).

A rotor assembly 10 includes a plurality of rotor disks, and the rotor disks may include a first rotor disk 100 and a second rotor disk 100' as illustrated in Fig. 2. The first rotor disk 100 and the adjacent second rotor disk 100' may be disposed so as to have a contact surface therebetween, or so as to be spaced by a predetermined distance (the present invention illustratively describes that the disks are disposed to come into close contact with each other).

As illustrated in Figs. 1 and 2, each of the first and second rotor disks 100 and 100' has a dovetail-shaped root slot (not shown) which is formed at the outer edge thereof so as to be engaged and coupled with a rotor blade.

The first and second rotor disks 100 and 100' have a plurality of protruding plate portions 112, 112', 114, and 114' which circumferentially protrude from both disk-shaped plate surfaces 102, 102', 104, and 104'. The facing protruding plate portions of the first and second rotor disks 100 and 100' are disposed to have a friction contact surface therebetween, as described above.

A plurality of slots 112a is recessed in the protruding plate portion 112 protruding from one plate surface 102 of the first rotor disk 100, and a plurality of slots 114a is recessed in the protruding plate portion 114 protruding from the other plate surface 104 of the first rotor disk 100. Each of the slots 112a and 114a is recessed to have a hexahedral shape. The second rotor disk 100' has the protruding plate portions 112' and 114', and slots 112a' and 114a' are recessed in the protruding plate portions 112' and 114'.

The protruding plate portion 114 formed on the other plate surface 104 of the first rotor disk 100 comes into close contact with the protruding plate portion 112' formed on one plate surface 102' of the second rotor disk 100'. In this case, the slots 114a formed in the protruding plate portion 114 of the first rotor disk 100 are preferably provided at positions corresponding to the slots 112a' formed in the protruding plate portion 112' of the second rotor disk 100' so that they communicate with each other.

Each torque pin 130 is inserted into the communicating slots of the first and second rotor disks 100 and 100', and has a spherical shape. The torque pin 130 is inserted into the communicating slots 114a and 112a', and uniformly occupies an area of the slot 114a of the first rotor disk 100 and an area of the slot 112a' of the second rotor disk 100'. To this end, the communicating slots 114a and 112a' preferably have a size such that the torque pin 130 is not randomly moved in the state of being inserted into the slots.

In more detail, the inner width of the communicating slots 114a and 112a' (the horizontal width of the communicating slots in Fig. 2) corresponds to the diameter of the torque pin 130, and the inner height thereof (the vertical height of the communicating slots in Fig. 2) also corresponds to the diameter of the torque pin 130. That is, the communicating slots 114a and 112a' may have a hexahedral shape that has a width corresponding to the diameter of the torque pin 130.

Here, the diameter of the torque pin 130 may be bigger than the inner width of the slot. With such a configuration, the first and second rotor disks 100, 100' could be more securely coupled when the two disks are pushed to each other due to an axial force caused by a tie rod (not shown).

The torque pin 130 is a component for transferring torque between the first and second rotor disks 100 and 100'. Accordingly, when the torque pin 130 has a spherical shape instead of a cylindrical or hexahedral shape, the radial load of the rotor disk applied to the torque pin 130 may be evenly supported. Therefore, it is possible to prevent the surface of the torque pin 130 from wearing due to an intensive load applied to only a portion of the torque pin, and to thus prevent the rotor disk from being damaged. In addition, since the torque pin 130 has a spherical shape, there is no need to consider an alignment direction or a gap when the torque pin is assembled. Therefore, the torque pin may be easily assembled.

As described above, one spherical torque pin may be inserted into each slot of the rotor disk according to the embodiment of the present invention, but the present invention may include a plurality of torque pins. Hereinafter, an example in which a plurality of torque pins is provided in one slot will be described (the detailed description of the same components as the above embodiment will be omitted).

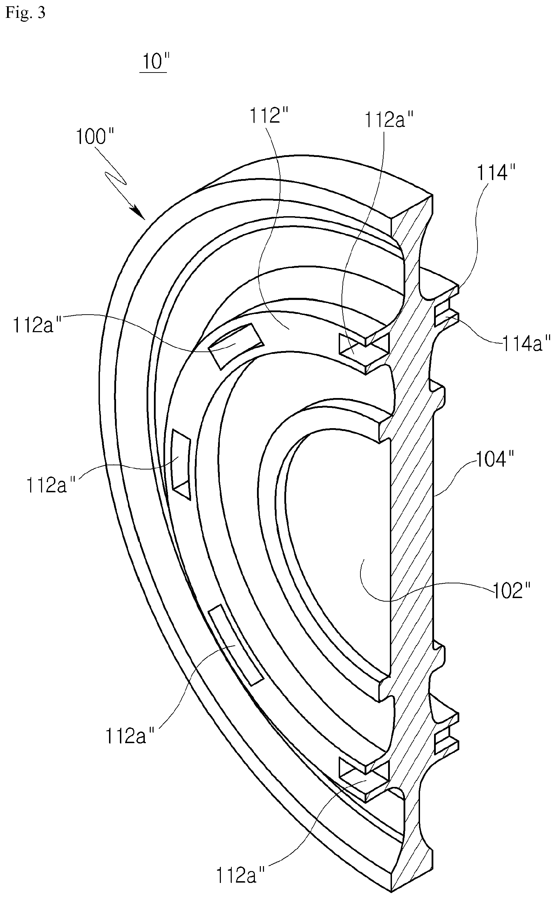

Fig. 3 is a perspective view illustrating a portion of a rotor disk according to another embodiment of the present invention. As illustrated in Fig. 3, a rotor assembly 10" according to another embodiment of the present invention may include a first rotor disk 100" and a second rotor disk (reference number is not shown since it has the same structure as the above embodiment).

A plurality of slots 112a" is recessed in a protruding plate portion 112" protruding from one plate surface 102" of the first rotor disk 100", and a plurality of slots 114a" is recessed in a protruding plate portion 114" protruding from the other plate surface 104" of the first rotor disk 100". Each of the slots 112a" and 114a" is recessed to have a hexahedral shape, and is formed to have a length such that a plurality of torque pins 130" is inserted into the slot. The second rotor disk has the same protruding plate portions and slots.

The protruding plate portion 114" formed on the other plate surface 104" of the first rotor disk 100" comes into close contact with the protruding plate portion formed on one plate surface of the second rotor disk. In this case, the slots 114a" formed in the protruding plate portion 114" of the first rotor disk 100" are preferably provided at positions corresponding to the slots formed in the protruding plate portion of the second rotor disk so that they communicate with each other.

The plurality of spherical torque pins 130" is inserted into the communicating slots of the first rotor disk 100" and the second rotor disk, and is inserted in line in the longitudinal direction of the slot. The torque pins 130" are inserted into the communicating slots and uniformly occupy an area of the slot 114a" of the first rotor disk 100" and an area of the slot of the second rotor disk. To this end, the communicating slots preferably have a size such that the torque pins 130" are not randomly moved in the state of being inserted into the slots.

As such, when the plurality of torque pins are provided, a load may be more effectively distributed compared to when one torque pin is provided.

As is apparent from the above description, a gas turbine rotor assembly with a torque pin according to exemplary embodiments of the present invention has an advantage in that a torque pin is easily assembled while a low load is applied to the torque pin since the torque pin has a spherical shape instead of a cylindrical shape.

While the present invention has been described with respect to the specific embodiments, it will be apparent to those skilled in the art that various changes and modifications may be made without departing from the scope of the invention as defined in the following claims.

## Claims

1. A gas turbine rotor assembly with a torque pin, comprising:
a plurality of rotor disks (100, 100'), each having protruding plate portions (112, 114, 112', 114') circumferentially protruding from both disk-shaped plate surfaces (102, 104), and a plurality of slots (112a, 114a, 112a', 114a') recessed in each of the protruding plate portions (112, 114, 112', 114'); and
at least one torque pin (130) inserted into one of the slots (112a, 114a, 112a', 114a'),
**characterized in that** the torque pin (130) is spherical.

2. The gas turbine rotor assembly according to claim 1, wherein the rotor disks (100, 100') are disposed such that the protruding plate portion (114) formed on one plate surface (104) of one rotor disk (100) comes into contact with the facing protruding plate portion (114') of the adjacent rotor disk (100').

3. The gas turbine rotor assembly according to claim 1 or 2, wherein the rotor disks (100, 100') are configured such that each slot (112a, 114a, 112a', 114a') in one protruding plate portion (112a, 114a, 112a', 114a') communicates with the slot (112a, 114a, 112a', 114a') facing with each slot (112a, 114a, 112a', 114a') while being formed in the protruding plate portion (112, 114, 112', 114') coming into contact with the one protruding plate portion (112, 114, 112', 114').

4. The gas turbine rotor assembly according to any one of the preceding claims , wherein the at least one torque pin (130) is inserted into the communicating slots (112a, 114a, 112a', 114a').

5. The gas turbine rotor assembly according to any one of the preceding claims s, wherein the rotor disks (100, 100') comprise a first rotor disk (100) and a second rotor disk (100'), and slots (112a, 114a, 112a', 114a') formed in contacting protruding plate portions of the first and second rotor disks (100, 100') communicate with each other.

6. The gas turbine rotor assembly according to any one of the preceding claims , wherein the torque pin (130) is inserted into the communicating slots (112a, 114a, 112a', 114a'), and uniformly occupies an area of the slot (112a, 114a) of the first rotor disk (100) and an area of the slot (112a', 114a') of the second rotor disk (100').

7. The gas turbine rotor assembly according to any one of the preceding claims , wherein the communicating slots (112a, 114a, 112a', 114a') have a size such that the torque pin (130) is not moved in the state of being inserted into the slots (112a, 114a, 112a', 114a').

8. The gas turbine rotor assembly according to any one of the preceding claims , wherein a plurality of torque pins (130) are inserted into a single slot (112a", 114a").

9. The gas turbine rotor assembly according to claim 8, wherein the number of pins inserted into the slots (112a", 114a") varies for each slots (112a", 114a").

10. The gas turbine rotor assembly according to any one of the preceding claims , wherein a diameter of the torque pin (130) is bigger than the width of the slot (112a, 114a, 112a', 114a').

11. The gas turbine rotor assembly according to any one of the preceding claims, wherein each of the slots (112a, 114a, 112a', 114a') is recessed to have a hexahedral shape.

12. The gas turbine rotor assembly according to any one of the preceding claims, wherein the inner width of the communicating slots (114a, 112a') corresponds to the diameter of the torque pin (130)

13. The gas turbine rotor assembly according to any one of the preceding claims, wherein the inner height of the communicating slots (114a, 112a') corresponds to the diameter of the torque pin (130)

14. The gas turbine rotor assembly according to any one of the preceding claims, wherein the torque pin (130) is adapted to transfer torque between the first and second rotor disks (100, 100').

15. The gas turbine rotor assembly according to any one of the preceding claims, wherein each of the slots (112a", 114a") has a length to accommodate a plurality of torque pins (130").

## Patentansprüche

1. Gasturbinenrotoranordnung mit einem Drehmomentstift, die Folgendes umfasst:
mehrere Rotorscheiben (100, 100'), die jeweils vorstehende Plattenabschnitte (112, 114, 112', 114'), die von beiden scheibenförmigen Plattenflächen (102, 104) umlaufend vorstehen, und mehrere Schlitze (112a, 114a, 112a', 114a'), die in jedem der vorstehenden Plattenabschnitte (112, 114, 112', 114') versenkt sind, besitzen; und
mindestens einen Drehmomentstift (130), der in einen der Schlitze (112a, 114a, 112a', 114a') eingesetzt ist,
**dadurch gekennzeichnet, dass** der Drehmomentstift (130) kugelförmig ist.

2. Gasturbinenrotoranordnung nach Anspruch 1, wobei die Rotorscheiben (100, 100') derart angeordnet sind, dass der vorstehende Plattenabschnitt (114), der an einer Plattenfläche (104) einer Rotorscheibe (100) gebildet ist, in Kontakt mit dem zugewandten vorstehenden Plattenabschnitt (114') der angrenzenden Rotorscheibe (100') gelangt.

3. Gasturbinenrotoranordnung nach Anspruch 1 oder 2, wobei die Rotorscheiben (100, 100') derart konfiguriert sind, dass jeder Schlitz (112a, 114a, 112a', 114a') in einem vorstehenden Plattenabschnitt (112a, 114a, 112a', 114a') mit jenem Schlitz (112a, 114a, 112a', 114a') kommuniziert, der diesem Schlitz (112a, 114a, 112a', 114a') zugewandt ist und in jenem vorstehenden Plattenabschnitt (112, 114, 112', 114') ausgebildet ist, der mit dem einen vorstehenden Plattenabschnitt (112, 114, 112', 114') in Kontakt gelangt.

4. Gasturbinenrotoranordnung nach einem der vorhergehenden Ansprüche, wobei der mindestens eine Drehmomentstift (130) in die kommunizierenden Schlitze (112a, 114a, 112a', 114a') eingesetzt ist.

5. Gasturbinenrotoranordnung nach einem der vorhergehenden Ansprüche, wobei die Rotorscheiben (100, 100') eine erste Rotorscheibe (100) und eine zweite Rotorscheibe (100') umfassen und Schlitze (112a, 114a, 112a', 114a'), die in kontaktierenden, vorstehenden Plattenabschnitten der ersten und der zweiten Rotorscheibe (100, 100') gebildet sind, miteinander kommunizieren.

6. Gasturbinenrotoranordnung nach einem der vorhergehenden Ansprüche, wobei der Drehmomentstift (130) in die kommunizierenden Schlitze (112a, 114a, 112a', 114a') eingesetzt ist und einen Bereich des Schlitzes (112a, 114a) der ersten Rotorscheibe (100) und einen Bereich des Schlitzes (112a', 114a') der zweiten Rotorscheibe (100') gleichmäßig belegt.

7. Gasturbinenrotoranordnung nach einem der vorhergehenden Ansprüche, wobei die kommunizierenden Schlitze (112a, 114a, 112a', 114a') eine Größe besitzen, derart, dass der Drehmomentstift (130) in dem Zustand, in dem er in die Schlitze (112a, 114a, 112a', 114a') eingesetzt ist, nicht bewegt wird.

8. Gasturbinenrotoranordnung nach einem der vorhergehenden Ansprüche, wobei mehrere Drehmomentstifte (130) in einen einzelnen Schlitz (112a", 114a") eingesetzt sind.

9. Gasturbinenrotoranordnung nach Anspruch 8, wobei die Anzahl von Stiften, die in die Schlitze (112a", 114a") eingesetzt sind, für jeden Schlitz (112a", 114a") variiert.

10. Gasturbinenrotoranordnung nach einem der vorhergehenden Ansprüche, wobei ein Durchmesser des Drehmomentstiftes (130) größer als die Breite des Schlitzes (112a, 114a, 112a', 114a') ist.

11. Gasturbinenrotoranordnung nach einem der vorhergehenden Ansprüche, wobei jeder der Schlitze (112a, 114a, 112a', 114a') derart versenkt ist, dass er eine sechsflächige Form besitzt.

12. Gasturbinenrotoranordnung nach einem der vorhergehenden Ansprüche, wobei die Innenweite der kommunizierenden Schlitze (114a, 112a') dem Durchmesser des Drehmomentstiftes (130) entspricht.

13. Gasturbinenrotoranordnung nach einem der vorhergehenden Ansprüche, wobei die Innenhöhe der kommunizierenden Schlitze (114a, 112a') dem Durchmesser des Drehmomentstiftes (130) entspricht.

14. Gasturbinenrotoranordnung nach einem der vorhergehenden Ansprüche, wobei der Drehmomentstift (130) ausgelegt ist, ein Drehmoment zwischen der ersten und der zweiten Rotorscheibe (100, 100') zu übertragen.

15. Gasturbinenrotoranordnung nach einem der vorhergehenden Ansprüche, wobei jeder der Schlitze (112a", 114a") eine Länge besitzt, um mehrere Drehmomentstifte (130") aufzunehmen.

## Revendications

1. Ensemble de rotor de turbine à gaz avec une tige de couple, comprenant :
une pluralité de disques de rotor (100, 100') ayant chacun des parties de plaque saillantes (112, 114, 112', 114') faisant saillie en circonférence à partir des deux surfaces (102, 104) de plaques en forme de disque, et une pluralité de fentes (112a, 114a, 112a', 114a') en creux dans chacune des parties de plaque saillantes (112, 114, 112', 114') ; et
au moins une tige de couple (130) insérée dans chacun des fentes (112a, 114a, 112a', 114a'),
**caractérisé en ce que** la tige de couple (130) est sphérique.

2. Ensemble de rotor de turbine à gaz selon la revendication 1, dans lequel les disques de rotor (100, 100') sont disposés de telle façon que la partie de plaque saillante (114) formée sur une surface de plaque (104) d'un disque de rotor (100) vient en contact avec la partie de plaque saillante (114') qui lui fait face du disque de rotor (100') adjacent.

3. Ensemble de rotor de turbine à gaz selon la revendication 1 ou 2, dans lequel les disques de rotor (100, 100') sont configurés de telle façon que chaque fente (112a, 114a, 112a', 114a') dans une partie de plaque saillante (112, 114, 112', 114') communique avec la fente (112a, 114a, 112a', 114a') faisant face avec chaque fente (112a, 114a, 112a', 114a') tout en étant formée dans la partie de plaque saillante (112, 114, 112', 114') venant en contact avec l'une partie de plaque saillante (112, 114, 112', 114').

4. Ensemble de rotor de turbine à gaz selon l'une quelconque des revendications précédentes, dans lequel l'au moins une tige de couple (130) est insérée dans les fentes (112a, 114a, 112a', 114a') en communication.

5. Ensemble de rotor de turbine à gaz selon l'une quelconque des revendications précédentes, dans lequel les disques de rotor (100, 100') comprennent un premier disque de rotor (100) et un second disque de rotor (100'), et des fentes (112a, 114a, 112a', 114a') formées en contactant des parties de plaque saillantes des premier et second disques de rotor (100, 100'), communiquent l'une avec l'autre.

6. Ensemble de rotor de turbine à gaz selon l'une quelconque des revendications précédentes, dans lequel la tige de couple (130) est insérée dans les fentes (112a, 114a, 112a', 114a') en communication, et occupe uniformément une zone de la fente (112a, 114a) du premier disque de rotor (100) et une zone de la fente (112a', 114a') du second disque de rotor (100').

7. Ensemble de rotor de turbine à gaz selon l'une quelconque des revendications précédentes, dans lequel les fentes (112a, 114a, 112a', 114a') en communication ont une taille telle que la tige de couple (130) n'est pas déplacée dans l'état d'être insérée dans les fentes (112a, 114a, 112a', 114a').

8. Ensemble de rotor de turbine à gaz selon l'une quelconque des revendications précédentes, dans lequel une pluralité de tiges de couple (130) est insérée dans une fente unique (112a", 114a").

9. Ensemble de rotor de turbine à gaz selon la revendication 8, dans lequel le nombre de broches insérées dans les fentes (112a", 114a") varie pour chaque fente (112a", 114a").

10. Ensemble de rotor de turbine à gaz selon l'une quelconque des revendications précédentes, dans lequel un diamètre de la tige de couple (130) est plus grand que la largeur de la fente (112a, 114a, 112a', 114a').

11. Ensemble de rotor de turbine à gaz selon l'une quelconque des revendications précédentes, dans lequel chacune des fentes (112a, 114a, 112a', 114a') est en creux pour avoir une forme d'hexaèdre.

12. Ensemble de rotor de turbine à gaz selon l'une quelconque des revendications précédentes, dans lequel la largeur intérieure des fentes (114a, 112a') en communication correspond au diamètre de la tige de couple (130).

13. Ensemble de rotor de turbine à gaz selon l'une quelconque des revendications précédentes, dans lequel la hauteur intérieure des fentes (114a, 112a') en communication correspond au diamètre de la tige de couple (130).

14. Ensemble de rotor de turbine à gaz selon l'une quelconque des revendications précédentes, dans lequel la tige de couple (130) est adaptée pour transférer le couple entre les premier et second disques de rotor (100, 100').

15. Ensemble de rotor de turbine à gaz selon l'une quelconque des revendications précédentes, dans lequel chacune des fentes (112a", 114a") a une longueur pour recevoir une pluralité de tiges de couple (130").
